# EUROPEAN PATENT APPLICATION

(11) **EP 1 378 383 A1**
(43) Date of publication of application: **07.01.2004**
(21) Application number: 02077655.5
(22) Date of filing: 04.07.2002
(51) Int. Cl.: B60H 1/32

(54) **A method and arrangement for an air conditioning system**

(71) Applicant: Ford Global Technologies, Inc., Dearborn, Michigan 48126 (US)
(72) Inventor: Mardberg, Björn, 413 21 Göteborg (SE); Rundström, Anders, 416 57 Göteborg (SE)
(74) Representative: Herbjörnsen, Rut

(57) **Abstract**

A method and an arrangement in a vehicle to control a compressor (1) for an air conditioning system is presented. The arrangement comprises a compressor (1), adapted to be driven by an internal combustion engine (5) and to assume a first and a second operating mode, at which a first and a second stage of compression is performed, respectively, the compression displacement being higher at the second stage than at the first stage of compression. A control system is adapted to receive signals corresponding to at least one detected temperature, to send signals to the compressor (1) so as to shift operating mode of the latter, based on the detected temperature. If the compressor (1) is in the first or second operating mode and the detected temperature is higher or lower, respectively, than an upper or lower limit temperature, respectively, the compressor (1) is shifted to the second or first operating mode, respectively.

## Description

### TECHNICAL FIELD

The present invention relates to a method and an arrangement in a vehicle to control a compressor for an air conditioning system, the compressor being adapted to be driven by an internal combustion engine.

### BACKGROUND

In vehicles equipped with an air conditioning system including a compressor, a control system could be adapted to control the compressor on the basis of detected values of certain parameters, such as the temperature at the evaporator of the air conditioning system or in the interior of the vehicle. In cases where a fixed displacement compressor is used, the compressor will cycle between two modes, i.e. operative and non-operative mode. Usually, the compressor is driven by the internal combustion engine of the vehicle, by means of a belt, and shifts between said modes are executed by operation of a magnetic clutch arranged by the compressor. Thereby, a shift of the compressor from non-operative to operative mode will cause a sudden power loss on the vehicle driveline. Since the start-up of the compressor and related power loss of the driveline occurs during a very short time interval, a loss of traction force causing a jerky behaviour of the vehicle will result. This will be experienced by the driver and passengers as uncomfortable, and could also influence the driveability of the vehicle. A similar problem occurs when the compressor shifts from operative to non-operative mode, causing a sudden increase in driveline power.

In a system of the type mentioned oscillations in the temperature of the evaporator and outflowing air will be un-avoidable. A problem with compressors cycling between an operative and a non-operative mode is that the amplitudes of the temperature oscillations will be large. This is due to time delays in the response to control actions, which tend to make the output temperatures fall outside temperature limit values in the control system. One reason for this is that when the compressor switches from non-active to active mode, some time lapses before full pressure has been obtained in the compressor. Similarly, when the compressor is switched to non-active state, it takes some time for the pressure to fall. Large oscillations of the temperature of air flowing into the vehicle interior will be experienced as uncomfortable to the driver and passengers. Also, a lower temperature limit is usually set to avoid freezing in the evaporator. If the output temperature oscillates so that, at repeated time intervals, it is lower than the lower temperature limit, the latter will have to be kept high enough for the output temperature not to cause freezing. This in turn will increase the average output temperature, and therefore lower the cooling performance of the AC-system.

Apart from clutch activated compressors, known art regarding vehicle air conditioning includes the use of compressors with an externally controlled variable displacement, see e.g. JP2001227826. However, such compressors are complicated and therefore expensive.

### SUMMARY

It is an object of the present invention to provide a method and an arrangement to control a compressor for a vehicle air conditioning system, which do not present the drawbacks described above.

It is a special object of the present invention to provide a method and an arrangement to control a compressor for a vehicle air conditioning system, at which interference with other vehicle components is reduced.

It is also an object of the present invention to provide a method and an arrangement to control a compressor for a vehicle air conditioning system, at which interference with the driveability of the vehicle is reduced.

It is another object of the present invention to a method and an arrangement to control a compressor for a vehicle air conditioning system, at which interference with the propulsion of the vehicle is reduced.

These objects are reached with a method and an arrangement according to the invention. The arrangement comprises a compressor being adapted to be driven by an internal combustion engine and to assume a first and a second operating mode, at which a first and a second stage of compression is performed, respectively, the compression displacement being higher at the second stage than at the first stage of compression. The vehicle comprises a control system being adapted to receive signals corresponding to at least one detected temperature or based on which at least one temperature can be determined, and to send signals to the compressor so as to shift operating mode of the latter, at least partly based on the detected or determined temperature. The method comprises the steps of, if the compressor is in the first operating mode and the detected or determined temperature is higher than a first upper limit temperature, shifting the compressor to the second operating mode, and if the compressor is in the second operating mode, and the detected or determined temperature is lower than a first lower limit temperature, shifting the compressor to the first operating mode.

Using a compressor with two stages of compression with different compression displacements will result in shifts between these stages being gradual, i.e. continuous in time, as opposed to the case where a mode switch is effected by an engagement or disengangement of a clutch. Therefore, the increase or decrease in power needed from the internal combustion engine will not be rapid, with the result that jerks in the vehicle propulsion, due to sudden changes of power in the drivetrain, will be reduced or eliminated. Therefore, the compressor can cycle between different modes of operation without the driver and passengers experiencing jerks in the vehicle.

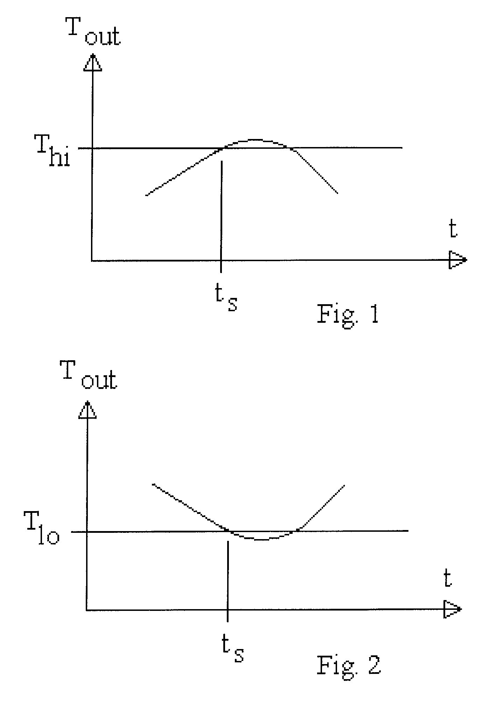

Also, in cases where the outdoor climate is relatively warm, the compressor arranged according to the invention may cycle between the first and the second mode. Thereby, the oscillations in the temperature of the outflowing air will be limited, compared to arrangements according to known art. For understanding we refer to fig. 1. The reason is that when the compressor cycle is in the first mode, i.e. low displacement compression, the rate of increase of the output temperature *T*_{*out*} will be lower than in the case of a disengaged compressor. When the temperature reaches the upper limit temperature *T*_{*h*}_{*t*} at *t*_{*s*}, and the compressor is switched to the second mode, because of the lower rate of inclination of the temperature before it reached the limit value, the delay until the temperature will start to decrease will be shorter. Therefore, the temperature will "swing" less above the upper limit temperature *T*_{*hi*}*,* with the result that the amplitude of temperature oscillations during compressor cycling will be lower. Also, during output temperature oscillation at compressor mode cycling, at maximum as well as minimum output temperatures differences between output temperatures and the limit temperatures will be small. As a result the mean output temperature will stay closer to the desired temperature.

Preferably, the compressor is adapted to assume a third operating mode, at which no compression is performed, the method further comprising the steps of, if the compressor is in the third operating mode, and the detected or determined temperature is higher than the first or a second upper limit temperature, shifting the compressor to the first operating mode, and if the compressor is in the first operating mode, and the detected or determined temperature is lower than the first or a second lower limit temperature, shifting the compressor to the third operating mode.

In cases where a lower limit temperature of the system is set to avoid freezing in the evaporator, and the climate is relatively cool, the compressor may cycle between the first and the third mode, i.e. low compression and no compression. We here refer to fig. 2. Since, during the compression stage the compressor is not working with full compression displacement, the declination of the output temperature *T*_{*out*} will be less. When the temperature has reached the lower limit temperature *T*_{*lo*} at *t*_{*s,*} and the compressor is switched to the non-compression mode, the decreased rate of declination of the temperature just before the mode switch will result in a smaller time delay until the temperature starts to increase. Therefore, the output temperature will fall less below the lower limit temperature *T*_{*lo*}*.* In other words, the temperature will "dip" less below the lower limit. This in turn allows for lowering the lower limit temperature *T*_{*lo*} and to obtain a better cooling performance since a lower temperature mean value will result. Alternatively, the lower limit temperature *T*_{*lo*}*,* set to avoid evaporator freezing, could be kept at essentially the same value as in a traditional one-stage compressor, which would decrease the risk of evaporator freezing even further. Also, during output temperature oscillation at compressor mode cycling, at maximum as well as minimum output temperatures differences between output temperatures and the limit temperatures will be small. As a result the mean output temperature will stay closer to the desired temperature.

Another advantage with the present invention is that it allows for compromises between AC-requirements and other power consumption requirements to be made. For example, in situations where a lot of engine power is needed for vehicle acceleration or driving uphill, and where large AC cooling requirements are present, instead of disengaging the AC compressor, the latter could be allowed to work in the first mode, i.e. where the compression displacement is less than maximum.

### BRIEF DESCRIPTION OF THE DRAWING

The invention is described with the aid of the drawings, in which
- fig. 1 and 2 show diagrams of temperatures as functions of time,
- fig. 3 shows a block diagram with elements practically used in the invention, and
- fig. 4 and 5 show diagrams of compressor displacements as functions of temperature.

### DETAILED DESCRIPTION

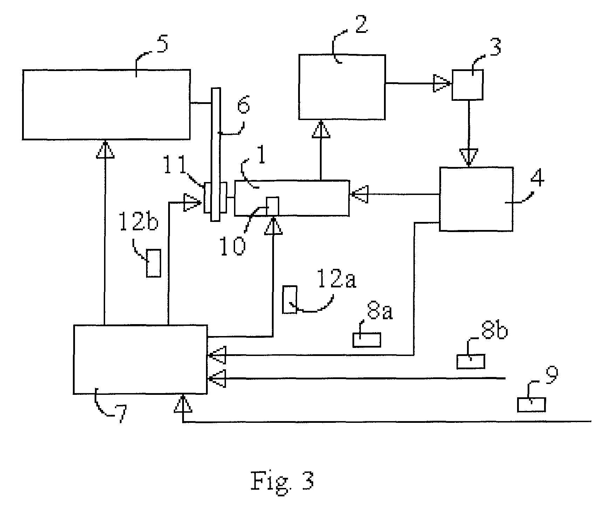

Fig. 3 shows a block diagram with elements practically used in the invention. In a vehicle a compressor 1 for an air conditioning system is adapted to compress a refrigerant. The latter is to be cooled in a condenser 2 and passed via an expansion valve 3 to an evaporator 4, where it extracts heat from fresh air passing to the vehicle interior. The compressor 1 is driven by an internal combustion engine 5 of the vehicle, by means of a belt 6.

The vehicle comprises a control system, including a control unit 7, adapted to receive, on one hand, detection signals 8a corresponding to a temperature detected at the evaporator 4, and, on the other hand, detection signals 8b corresponding to a temperature detected in the vehicle interior. Alternatively, the latter type of detection signals 8b are not present in the arrangement. The control unit 7 is also adapted to receive control signals 9 corresponding to a desired temperature in the vehicle interior. The detection signals 8a could either correspond to the air temperature downstream of the evaporator, or to the pressure of the refrigerant by the evaporator, from which the temperature can be determined.

The compressor 1 could be a vane rotary type compressor, by a Japanese producer called Zexel, in which a rotor with vanes rotates inside an elliptical cylinder, whereby the space divided by each vane is continuously repeating suction, compression, and discharge cycles.

The compressor 1 is adapted to assume a first and a second operating mode. At the first operating mode a first stage of compression is performed, and at the second operating mode a second stage of compression is performed, whereby the compression displacement is higher at the second stage of compression than at the first stage of compression. Preferably, the displacement at the first stage is approximately 40/110 of the displacement at the second stage. Shifts between the first and second compression stage are performed by activation of a displacement control valve 10 in the compressor 1. Also, the displacement control can be limited to the two stages, and to no displacements therebetween. Such an arrangement could provide advantages in cost when compared to a system which allows control of the displacement over a continuous range of displacements.

The compressor 1 comprises a magnetic clutch 11 for connection to the belt 6, and is adapted, by disengagement of the clutch 11, to assume a third operating mode at which no compression is performed.

The control unit 7 is adapted to determine, at least partly based on the received temperature and control data 8a, 8b, 9, the operating mode at which the compressor is to be in, and to send control signals 12a, 12b to the compressor 1 so as to control the operating modes of the latter.

As an example, if the compressor 1 is in the second operating mode, at which the high displacement compression is performed, the control unit 7 may receive a detection signal, corresponding to a temperature being below a first lower limit temperature. The first lower limit temperature could be set to avoid freezing in the evaporator, at which the signal received would be a detection signal 8a corresponding to the evaporator temperature. The first lower limit temperature could also be determined based on vehicle interior cooling requirements, at which the signal received would be a detection signal 8b, corresponding to a temperature in the vehicle interior. Thereby, the control unit sends a control signal 12a to the displacement control valve 10 so as for the compressor 1 to change to the first operating mode. This will lower the compression displacement of the compressor 1.

Due to the principle of action of the compressor 1, the change from a high displacement compression to a low displacement compression will be gradual. Therefore, the decrease in power needed from the engine 5 will not be rapid, so that no jerk will occur in the vehicle propulsion, due to a sudden increase of power in the drivetrain.

Similarly, if the compressor 1 is in the first operating mode, at which the low displacement compression is performed, the control unit 7 may receive a detection signal 8b, corresponding to a temperature in the vehicle interior being above a first upper limit temperature determined on the basis of vehicle interior cooling requirements. Thereby, the control unit sends a control signal 12a to the displacement control valve 10 so as for the compressor 1 to change to the second operating mode. This will increase the compression displacement of the compressor 1. Thereby, the change from a low displacement compression to a high displacement compression will be gradual. Therefore, the increase in power needed from the engine 5 will not be rapid, so that no jerk will occur in the vehicle propulsion, due to a sudden decrease of power in the drivetrain.

As a further example, if the compressor 1 is in the first operating mode, at which the low displacement compression is performed, the control unit 7 may receive a detection signal , corresponding to a temperature being below the first lower limit temperature. The signal received could also correspond to a temperature being below a second lower limit temperature, based on some other requirement than that of the first lower limit temperature and being not equal to the first lower limit temperature. Thereby, the control unit sends a control signal 12b to the clutch 11 so as to disengage the latter and for the compressor 1 to change to the third operating mode, at which the compressor is inactive.

Since the first operating mode of the compressor 1 corresponds to a displacement being considerably lower than the full capacity of the compressor, the shift from the first to the third operating mode by disengagement of the clutch 11 will result in a power increase in the vehicle drivetrain, which is lower than if a shift from full displacement compression to non-activation of the compressor would have taken place.

Similarly, if the compressor 1 is in the third operating mode, at which no compression is performed, the control unit 7 may receive a detection signal 8b, corresponding to a temperature in the vehicle interior being above the first upper limit temperature. The signal received could also correspond to a temperature being above a second upper limit temperature, based on some other requirement than that of the first upper limit temperature. Thereby, the control unit sends a control signal 12b to the clutch 11 so as to engage the latter and for the compressor 1 to change to the first operating mode, at which a low displacement compression takes place. The shift from the third to the first operating mode by engagement of the clutch 11 will result in a power decrease in the vehicle drivetrain, which is lower than if a shift from non-activation of the compressor to full displacement compression would have taken place. This will limit the jerks in the vehicle propulsion, due to sudden changes of power in the drivetrain.

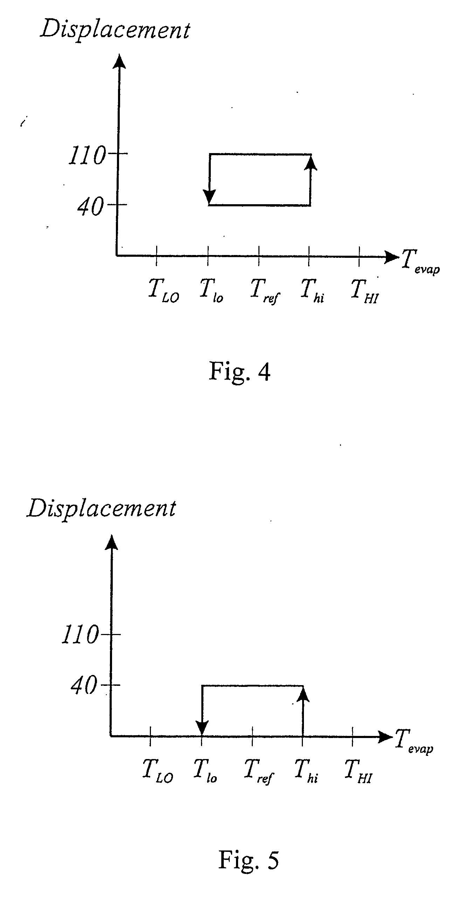

Fig. 4 depicts a first compressor cycle and shows the relationship between temperature limit values *T*_{*lo*}*, T*_{*hi*}, and compressor displacements 40, 110 at the first mode and the second mode, respectively. The limit values can be set based partly on a reference temperature *T*_{*ref*} It can be seen how the temperature *T*_{*evap*} is allowed to increase at the first mode until it reaches the upper limit temperature *T*_{*hi*}*,* at which the compressor switches to the second mode. Thereafter, the temperature is allowed to decrease to the lower limit temperature *T*_{*lo*}*,* where the compressor switches back to the first mode.

Fig. 5 depicts a second compressor cycle and shows the relationship between temperature limit values *T*_{*lo*}*, T*_{*hi*}, and compressor displacements 0, 40 at the third mode and the first mode, respectively. It can be seen how the temperature is allowed to increase at the third mode until it reaches the upper limit temperature *T*_{*hi*}*,* at which the compressor switches to the first mode. Thereafter, the temperature is allowed to decrease to the lower limit temperature *T*_{*lo*}*,* where the compressor switches back to the third mode.

If the compressor is working in the first cycle, depicted in fig. 4, it can switch to the second cycle depicted in fig. 5. As an example this switch can be activated when the output temperature at any point in time reaches an ultimate lower limit temperature *T*_{*LO*}*,* being lower than the lower limit temperature *T*_{*lo*}*.* Correspondingly, a switch from the second cycle to the first cycle can be activated when the output temperature at any point in time reaches an ultimate upper limit temperature *T*_{*HI*}*,* being higher than the upper limit temperature *T*_{*hi*}*.*

## Claims

1. A method in a vehicle to control a compressor (1) for an air conditioning system, the compressor (1) being adapted to assume a first and a second operating mode, at which a first and a second stage of compression is performed, respectively, the compression displacement being higher at the second stage than at the first stage of compression, comprising the steps of,
- if the compressor (1) is in the first operating mode and a detected or determined temperature in said system is higher than a first upper limit temperature, shifting the compressor to the second operating mode, and
- if the compressor (1) is in the second operating mode, and the detected or determined temperature is lower than a first lower limit temperature, shifting the compressor to the first operating mode.

2. A method according to claim 1, whereby the compressor (1) is adapted to assume a third operating mode, at which no compression is performed, further comprising the steps of,
- if the compressor (1) is in the third operating mode, and the detected or determined temperature is higher than the first or a second upper limit temperature, shifting the compressor to the first operating mode, and
- if the compressor (1) is in the first operating mode, and the detected or determined temperature is lower than the first or a second lower limit temperature, shifting the compressor to the third operating mode.

3. An arrangement in a vehicle to control a compressor (1) for an air conditioning system, the compressor (1) being adapted to assume a first and a second operating mode, at which a first and a second stage of compression is performed, respectively, the compression displacement being higher at the second stage than at the first stage of compression, the vehicle comprising a control system (7) being adapted to receive signals (8a, 8b) corresponding to at least one detected temperature or based on which at least one temperature can be determined, and to send signals (12a) to the compressor (1) so as to shift operating mode of the latter, at least partly based on the detected or determined temperature, the control system being adapted to, if the compressor (1) is in the first operating mode and the detected or determined temperature is higher than a first upper limit temperature, send at least one signal (12a) so as to shift the compressor to the second operating mode, and if the compressor (1) is in the second operating mode, and the detected or determined temperature is lower than a first lower limit temperature, send at least one signal (12a) so as to shift the compressor to the first operating mode.

4. An arrangement according to claim 3, whereby the compressor (1) is adapted to assume a third operating mode, at which no compression is performed, the control system being adapted to, if the compressor (1) is in the third operating mode, and the detected or determined temperature is higher than the first or a second upper limit temperature, send at least one signal (12b) so as to shift the compressor to the first operating mode, and if the compressor (1) is in the first operating mode, and the detected or determined temperature is lower than the first or a second lower limit temperature, send at least one signal (12b) so as to shift the compressor to the third operating mode.
